# EUROPEAN PATENT SPECIFICATION

(11) **EP 4 348 035 B1**
(45) Date of publication and mention of the grant of the patent: **11.11.2026**
(21) Application number: 22731514.0
(22) Date of filing: 24.05.2022
(51) Int. Cl.: F03B 13/06, F03D 9/17

(54) **A SYSTEM FOR THE GENERATION OF HYDROELECTRIC POWER AND A METHOD OF CONSTRUCTING SAME**
SYSTEM ZUR ERZEUGUNG VON HYDROELEKTRISCHEM STROM UND VERFAHREN ZUR KONSTRUKTION DAVON
SYSTÈME DESTINÉ À LA GÉNÉRATION D'ÉNERGIE HYDROÉLECTRIQUE ET SON PROCÉDÉ DE CONSTRUCTION

(30) Priority: 25.05.2021 GB 202107408
(43) Date of publication of application: 10.04.2024
(73) Proprietor: D&A Concept Design Limited, Dublin A94 N232 (IE)
(72) Inventor: DOYLE, Anthony, Dublin (IE); DOHERTY, David Nial John, Dublin (IE)
(74) Representative: O'Connor, Michael Donal
(86) International application number: PCT/EP2022/064134
(87) International publication number: WO 2022/248516

(56) References cited:
- CA-A1- 2 467 287
- JP-A- S5 411 517
- US-A1- 2009 140 525
- US-A1- 2018 030 958

## Description

### Technical Field:

This invention relates to a system for the generation of hydroelectric power and a method of constructing the system for the generation of hydroelectric power.

### Background Art:

Hydroelectric power generation has been used for many years to produce electricity for households and businesses. Hydroelectric power generation is seen as a more environmentally friendly and a more sustainable way of generating electricity than, say, the burning of fossil fuels. Therefore, as society looks to satisfy their electricity needs in a more environmentally friendly manner, hydroelectric power generation is seen as one useful choice.

There are a number of disparate systems for the generation of hydroelectric power. For example, there are the conventional hydroelectric power generation plants that have a large body of water such as a natural lake or a reservoir built with a man-made dam, that is gradually emptied by allowing the water to pass over a turbine and then flow into a river at a lower height. There are also pumped storage plants that consist of two bodies of water at different heights. Pumped storage plants allow for the controlled discharge of water from the upper reservoir, over a turbine, to the lower reservoir during the day when it is necessary to meet increased electricity demand. Then, when the demand for electricity reduces, for example at night-time, the water is pumped from the lower reservoir back up to the upper reservoir for use the following day during peak hours. A problem with these systems is that they typically require substantial investment, involve large infrastructure building projects, take several years to implement and require the right geographical configuration to be practical and feasible.

In addition to the conventional hydroelectric power generation plants and pumped storage plants, there is a current trend towards providing submersible hydroelectric power generation plants. These submersible hydroelectric power generation plants operate in a fashion similar to the pumped storage plants in that they can be used to generate electricity at peak times and thereafter be pumped out at off-peak times for use the following day during peak times. Heretofore, none of the known available submersible systems has been entirely satisfactory as they are relatively expensive and difficult to maintain.

United States Patent Application Publication No. US2009/0140525, in the name of DeAngeles, discloses a system and process for generating hydroelectric power. Japanese Patent Application Publication no. JP54011517, in the name of Agency of Industrial Science & Technology, discloses a marine pressurized water type energy storing method. Canadian Patent Application Publication No. CA2467287, in the name of Kubb, discloses an ocean energy accumulator that operates using hydraulic fluid.

It is an object of the present invention to provide a system for the generation of hydroelectric power that overcomes at least some of the shortcomings of the known systems. It is a further object of the present invention to provide a system for the generation of hydroelectric power that can be commissioned quicker than large fixed infrastructure projects, typically in months or less rather than years. It is a further still object of the present invention to provide a useful choice to the entity responsible for electricity generation.

### Summary of Invention:

According to the invention there is provided a system for the generation of hydroelectric power according to claim 1.

By having such a system, the submersible reservoir may be brought to a desired location and then submerged below the surface of the water to an appropriate depth, for example resting on the sea bed floor with a head height of water of the order of 50 metres above the charging inlet. Water is allowed into the submersible reservoir and passes over the turbine to generate electricity. The electricity is stored or transferred to an electricity grid. The floating platform with the wind turbine can provide an additional source of electricity if needed and/or be used to provide electricity to operate the compressor to supply pressurized gas. Advantageously, the platform and/or the submersible reservoir can be moved to other locations if desired. If it is desired to move the submersible reservoir, the submersible reservoir is simply "floated" and moved to the next location.

In one embodiment of the invention there is provided a system for the generation of hydroelectric power in which the submersible reservoir comprises an adjustable ballast system for adjusting the ballast of the submersible reservoir. This is seen as a particularly effective way of operating the submersible reservoir. The depth of the submersible reservoir may be chosen to provide an adequate head of water above the charging inlet to provide sufficient water pressure over the turbine. In some ways, the system may be seen to operate in a fashion similar to a submarine ballast system. Similarly, if it is necessary to move the submersible reservoir, the adjustable ballast system could be operated to "float" the submersible reservoir so that it can be moved.

In one embodiment of the invention there is provided a system for the generation of hydroelectric power in which the adjustable ballast system comprises at least one ballast tank.

In one embodiment of the invention there is provided a system for the generation of hydroelectric power in which the adjustable ballast system comprises a plurality of ballast tanks spaced apart around the periphery of the reservoir chamber.

In one embodiment of the invention there is provided a system in which the adjustable ballast system comprises a dedicated volume of the reservoir chamber at the base of the submersible reservoir chamber.

In one embodiment of the invention there is provided a system in which the adjustable ballast system comprises a dedicated volume of the reservoir chamber at the base of the submersible reservoir chamber.

According to the present invention there is provided a system for the generation of hydroelectric power in which the submersible reservoir comprises an upright service shaft for engagement of the floating platform. This is seen as a particularly good way to connect the submersible reservoir with the floating platform and provide conduits for services between the floating platform and the submersible reservoir. In addition, by having the upright service shaft, the upright service shaft may provide a guide for the submersible reservoir as it is submerged and/or floated.

According to the present invention there is provided system in which the floating platform is moveable upwards and downwards in a reciprocal fashion about the service shaft.

In one embodiment of the invention there is provided a system for the generation of hydroelectric power in which the wind turbine is operatively connected to the generator. In this way, the wind turbine may be used to power equipment in the submersible reservoir, such as, but not limited to, compressors, pumps, winches and the like.

In one embodiment of the invention there is provided a system for the generation of hydroelectric power in which the floating platform comprises a plurality of spaced apart platform stabilizers. By having a plurality of stabilizers, the platform will be steady and can be held on station above the submersible reservoir.

In one embodiment of the invention there is provided a system for the generation of hydroelectric power in which the floating platform comprises three spaced apart platform stabilizers.

In one embodiment of the invention there is provided a system for the generation of hydroelectric power in which the floating platform is provided with at least one anchor and tether connected to the anchor.

In one embodiment of the invention there is provided a system for the generation of hydroelectric power in which the submersible reservoir comprises means to detect the level of water in the reservoir chamber and releasably seal the water charging inlet upon the water reaching a predetermined level in the reservoir chamber. In this way, it is possible to control the level of water in the reservoir chamber and ensure that the turbine does not become flooded.

In one embodiment of the invention there is provided a system for the generation of hydroelectric power in which there is provided a battery storage unit for storage of electricity generated in the generator.

In one embodiment of the invention there is provided a system for the generation of hydroelectric power in which there is provided a wired connection to the electricity mains grid for distribution of the electricity generated in the generator.

In one embodiment of the invention there is provided a system for the generation of hydroelectric power in which the floating platform is releasably secured to the submersible reservoir. This is seen as a particularly preferred configuration of system according to the invention. By having the floating platform releasably secured to the submersible reservoir, the floating platform can be moved independently of the submersible reservoir and can be used on multiple disparate submersible reservoirs in different locations as and when needed. In addition, the floating platform can be brought for repair or servicing to a remote location without moving the submersible reservoir.

In one embodiment of the invention there is provided a system for the generation of hydroelectric power in which there is provided a propulsion system for moving the floating platform. In this way, the floating platform can be moved from one location to another location when required.

In one embodiment of the invention there is provided a system for the generation of hydroelectric power in which there is provided a propulsion system for moving the submersible reservoir. In this way, the submersible reservoir can be moved from one location to another location when required.

In one embodiment of the invention there is provided a method of constructing a system for the generation of hydroelectric power of the type as claimed comprising the steps of:
partially submerging the submersible reservoir;
manoeuvering the floating platform and the submersible reservoir relative to each other so that the floating platform is substantially above the submersible reservoir;
connecting the floating platform to the upright service shaft of the submersible reservoir; and
sinking the submersible reservoir by actuating the adjustable ballast system by evacuating more air from the ballast tanks 209 and flooding the ballast tanks.

In one embodiment of the invention there is provided a method of constructing a system for the generation of hydroelectric power comprising the subsequent step of anchoring the floating platform to the sea bed.

In one embodiment of the invention there is provided a method of constructing a system for the generation of hydroelectric power comprising the initial step of towing the submersible reservoir and floating platform to a desired location.

In one embodiment of the invention there is provided a method of constructing a system for the generation of hydroelectric power comprising the intermediate step of adjusting the length of stabilizer legs of the submersible reservoir prior to sinking the submersible reservoir to the sea bed.

### Brief Description of the Drawings:

The invention will now be more clearly understood from the following description of some embodiments thereof given by way of example only with reference to the accompanying drawings, in which:-
Figure 1 is a diagrammatic representation of a system for the generation of hydroelectric power according to the invention;
Figure 2(a) is a top plan diagrammatic representation view of a floating platform forming part of the system for the generation of hydroelectric power;
Figure 2(b) is a top plan diagrammatic representation view of a submersible reservoir forming part of the system for the generation of hydroelectric power;
Figure 2(c) is a side diagrammatic representation view of the components of the system for the generation of hydroelectric power;
Figure 2(d) is a top plan diagrammatic representation view of the floating platform forming part of the system for the generation of hydroelectric power;
Figure 2(e) is a top plan diagrammatic representation view of the submersible reservoir forming part of the system for the generation of hydroelectric power;
Figure 2(f) is a side diagrammatic representation view of the components of the system for the generation of hydroelectric power being moved into position for engagement;
Figure 2(g) is a top plan diagrammatic representation view of the components of the system for the generation of hydroelectric power in engagement;
Figure 2(h) is a side diagrammatic representation view of the components of the system for the generation of hydroelectric power in engagement;
Figure 2(i) is a top plan diagrammatic representation view of the components of the system for the generation of hydroelectric power in operation;
Figure 2(j) is a side diagrammatic representation view of the components of the system for the generation of hydroelectric power in operation;
Figure 3(a) is a side view diagrammatic representation of the submersible reservoir of the system according to the invention;
Figure 3(b) is a top plan view diagrammatic representation of the submersible reservoir of the system according to the invention;
Figure 3(c) is a view along the lines C-C of the submersible reservoir of the system according to the invention;
Figure 3(d) is a cross-sectional view along the lines D-D of the submersible reservoir of the system according to the invention;
Figure 3(e) is a cross-sectional view along the lines E-E of the submersible reservoir of the system according to the invention;
Figure 4(a) is a side diagrammatic representation of the floating platform of the system according to the invention;
Figure 4(b) is a top plan exploded view of some of the components from the floating platform of the system according to the invention;
Figure 4(c) is a top plan view of the floating platform without the turbine;
Figures 5(a) and 5(b) are diagrammatic representations of another embodiment of a system for the generation of hydroelectric power according to the invention; and
Figure 6 is a diagrammatic representation of another still embodiment of submersible reservoir for use in the system according to the invention.

### Detailed Description of the Drawings:

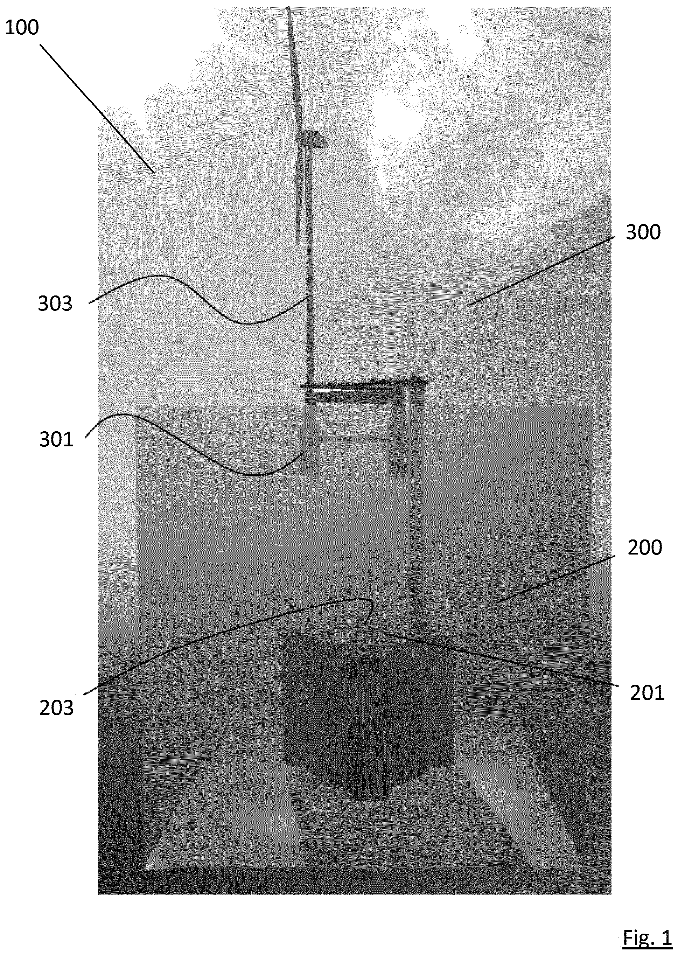

Referring first of all to Figure 1, there is shown a system for the generation of hydroelectric power, indicated generally by the reference numeral 100, comprising a submersible reservoir 200 and a floating platform 300. The submersible reservoir has a releasably sealable water charging inlet 201, a water conduit 203 extending inwardly from the water charging inlet and feeding a reservoir chamber (not shown) internal the submersible reservoir. There is provided a turbine (not shown) in the water conduit 203 and a generator (not shown) operatively connected to the turbine. A releasably sealable water discharge outlet (not shown) allows for the evacuation of water from the reservoir chamber. There is further provided a gas compressor and a gas supply (not shown). The floating platform 300 is secured to the submersible reservoir 200 and has at least one stabilizer 301, and a wind turbine 303 mounted on the floating platform.

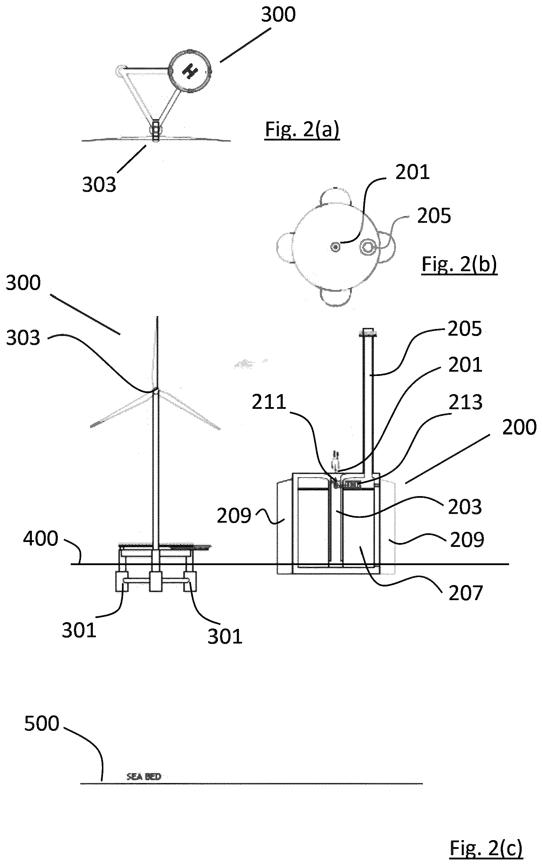

Referring now to Figures 2(a) to 2(j) inclusive, there is shown various views of the components of the system 100 for the generation of hydroelectric power being constructed. Referring specifically to Figures 2(a) to 2(c), Figure 2(a) shows a plan view of the floating platform, Figure 2(b) shows a plan view of the submersible reservoir, and Figure 2(c) shows a side view of the components before assembly. In Figure 2(c), the submersible reservoir 200 and the floating platform are shown separate from each other. The submersible reservoir has an upright service shaft 205 for engagement of the floating platform and for delivery of services between the platform and the submersible reservoir. The upright service shaft also provides a vent for air from the reservoir chamber as water is allowed to enter the chamber (as will be discussed in greater detail below). The floating platform and the submersible reservoir are both predominantly above the water level 400. The submersible reservoir has a reservoir chamber 207 that may be filled with water, and an adjustable ballast system comprising a plurality of ballast tanks 209. In addition, the turbine 211 and the generator 213 are shown.

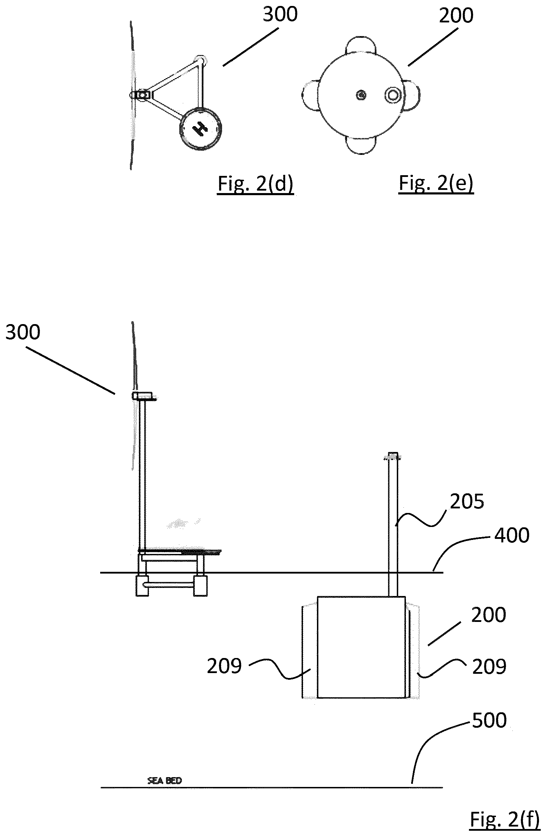

Referring specifically to Figures 2(d) to 2(f), Figure 2(d) shows a plan view of the floating platform, Figure 2(e) shows a plan view of the submersible reservoir, and Figure 2(f) shows a side view of the components being brought into alignment for assembly. In Figure 2(f), there is shown a view in which the adjustable ballast system has been actuated to flood the ballast tanks 209 and submerge the submersible reservoir 200 substantially below the water level 400. In this position, the submersible reservoir is still above the sea bed 500.

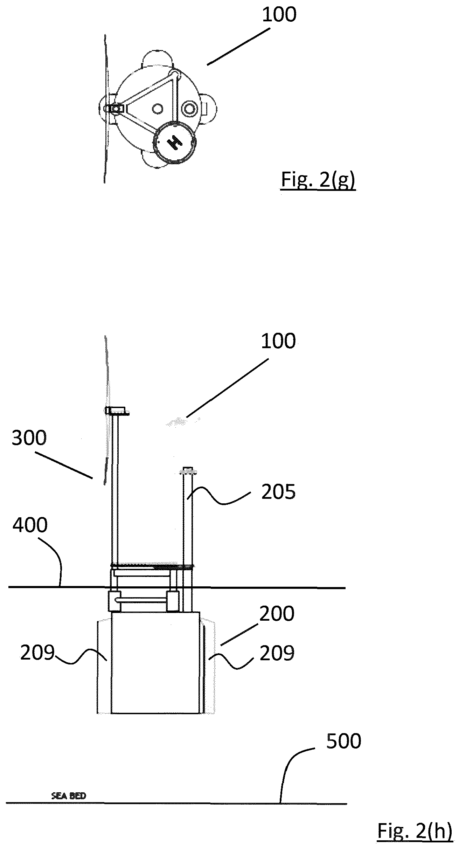

Referring now to Figures 2(g) and 2(h), Figure 2(g) shows a plan view of the components in engagement with each other, and Figure 2(h) shows a side view of the components in engagement with each other. The floating platform 300 and the submersible reservoir 200 are manoeuvred relative to each other so that the floating platform 300 is substantially above the submersible reservoir 200. In this position, the floating platform may be connected to the upright service shaft 205 of the submersible reservoir.

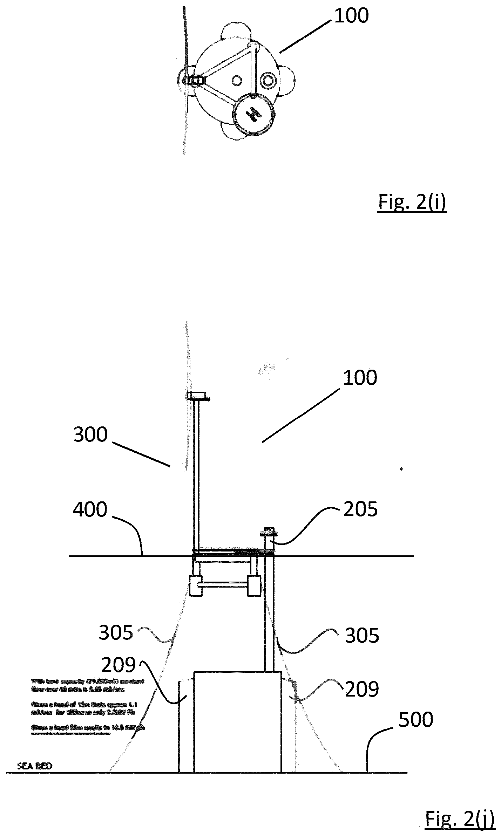

Referring now to Figures 2(i) and 2(j), Figure 2(i) shows a plan view of the components in engagement and ready for operation, and Figure 2(j) shows a side view of the components in engagement and ready for operation. Once the upright service shaft has been connected to the floating platform (the floating platform will preferably be able to move upwards and downwards in a reciprocal fashion about the shaft), the submersible reservoir is "sunk" by actuating the adjustable ballast system by evacuating more air from the ballast tanks 209 and flooding the ballast tanks. The submersible reservoir will settle on the sea bed 500. Anchors (not shown) connected to tethers 305 which in turn are connected to the floating platform 300, are lowered to the sea bed 500 to provide additional stability to the floating platform and hold it in position.

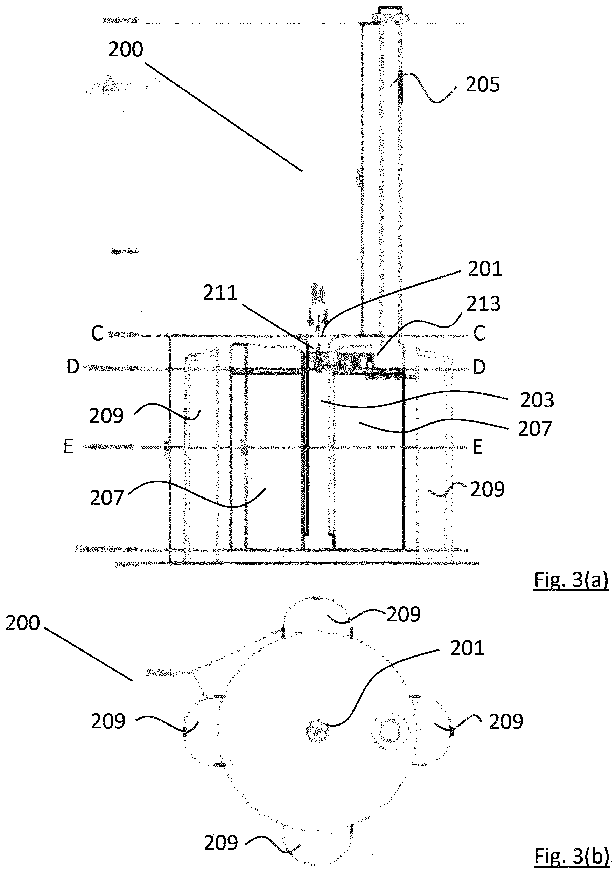

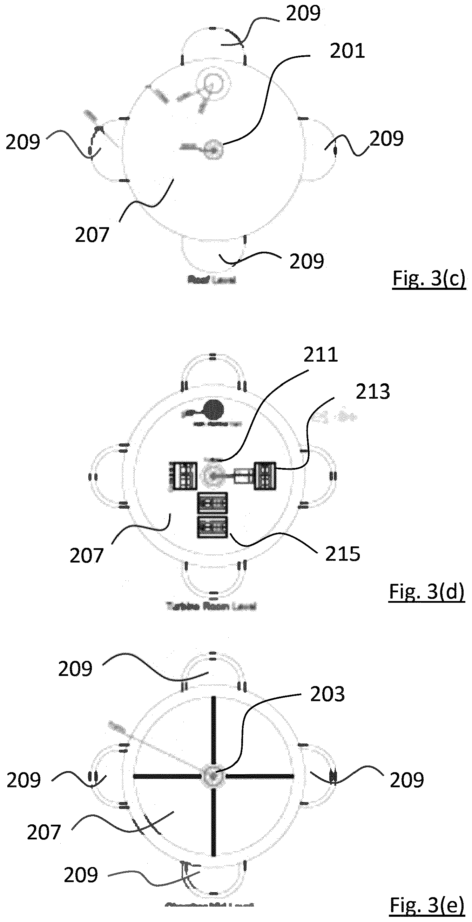

Referring now to Figures 3(a) to 3(e) inclusive, there is shown diagrammatic representations of the submersible reservoir of the system according to the invention. the submersible reservoir comprises an upright services conduit 205 with air vent, a water inlet 201, a water conduit 203 fed from the water inlet 201 to the reservoir chamber 207, and a turbine 211 in the water conduit. The turbine is connected to a generator 213. It can be seen from Figures 3(b) to 3(e) inclusive that there are four ballast tanks, circumferentially spaced around the container. However, the configuration and number of ballast tanks may be varied from the embodiment shown without departing from the scope of the present invention.

In use, when the submersible reservoir is submerged to the desired depth below the water, a closure (not shown) is removed from the water inlet 201 to allow water to flow through the inlet, along the water conduit 203 and over the turbine. The turbine, as it turns, is connected to the generator where the rotation of the turbine is converted into electricity. The manner in which electricity is generated from a turbine is well known in the art and a full description thereof is deemed unnecessary for the purposes of this specification. A battery pack 215, as shown in Figure 3(d) is used to store electricity if desired and a cable (not shown) is used to transfer generated electricity to the electricity grid (not shown) ashore. The water passing over the turbine continues down through the water conduit into the reservoir chamber 207. Air from the chamber is vented through the air vent in the services conduit 205. When the water level in the reservoir chamber and water conduit is just below the turbine, the closure is closed once more to prevent further ingress of water into the reservoir chamber.

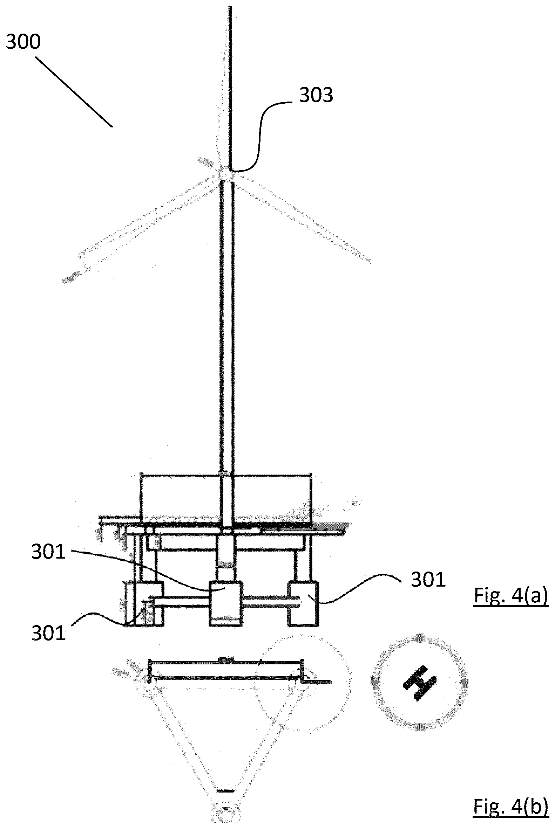

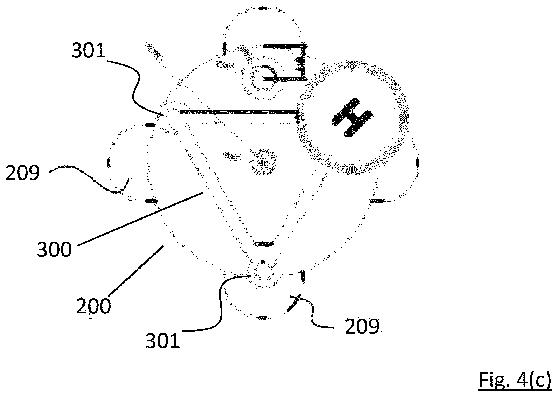

Referring now to Figures 4(a) to 4(c) inclusive, there are shown diagrammatic representations of the floating platform of the system according to the invention. In Figures 4(a) and 4(b), the floating platform is shown with three stabilisers 301, in the absence of the submersible reservoir. In Figure 4(c), there is shown a view from above with the floating platform 300 shown superimposed on top of the submersible reservoir 200 in its operating position.

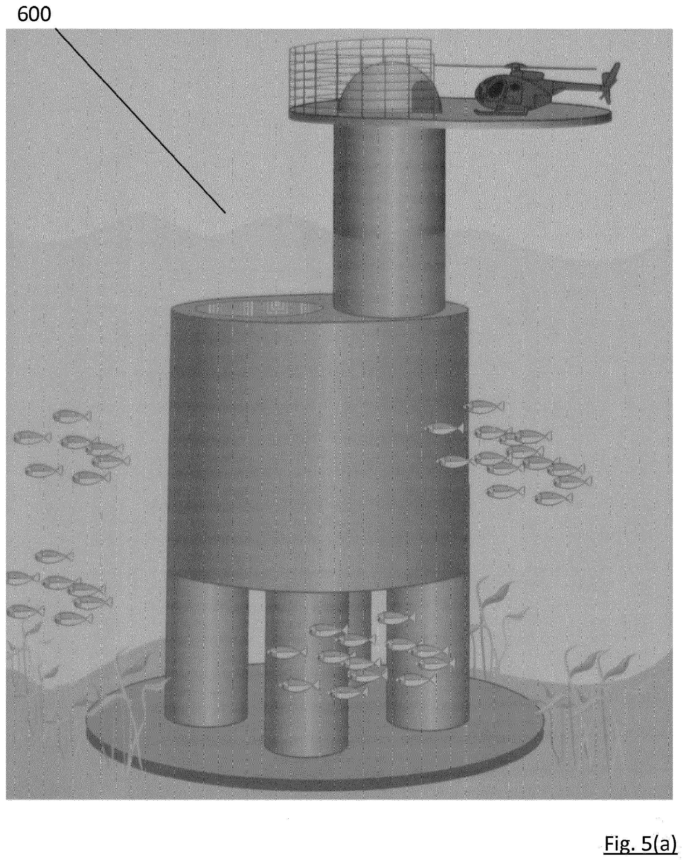

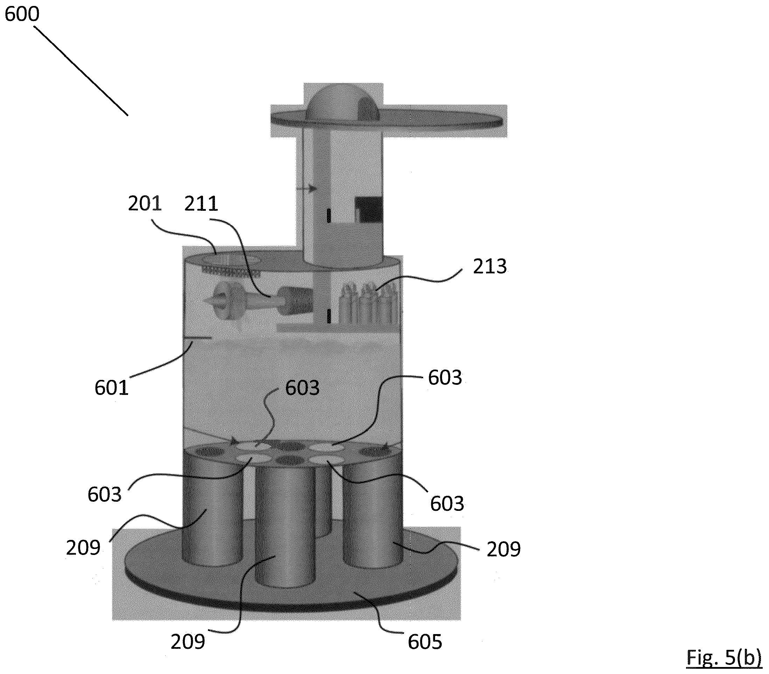

Referring to Figures 5(a) and 5(b), there is shown diagrammatic representations of another embodiment of a system for the generation of hydroelectric power according to the invention, indicated generally by the reference numeral 600, where like parts have been given the same reference numeral as before. The floating platform has been omitted for clarity. Referring specifically to Figure 5(b), there is shown a cross-sectional view of the submersible reservoir, with the turbine below the water inlet. Water flows through the water inlet, over the turbine 211, which is converted into electricity by the generator 213. When the water in the reservoir chamber reaches the cut-off level 601, the charging water inlet is closed with a closure (not shown) to prevent further water ingress, and the water outlets 603, also referred to as shores, are opened up (by, for example, moving a closure relative to the shore). Air is pumped into the reservoir chamber to evacuate the water from the reservoir chamber. Once the water has been evacuated from the reservoir chamber, the outlet shores may be closed once more and the inlet opened to continue the process of electricity generation.

It can be seen that the adjustable ballast system's ballast tanks 209 are located below the reservoir chamber rather than along the sides of the chamber and compressed air may be stored in these ballast tanks to allow the air to be injected into the reservoir chamber to evacuate the water from the chamber. A base 605 is provided below the ballast tanks.

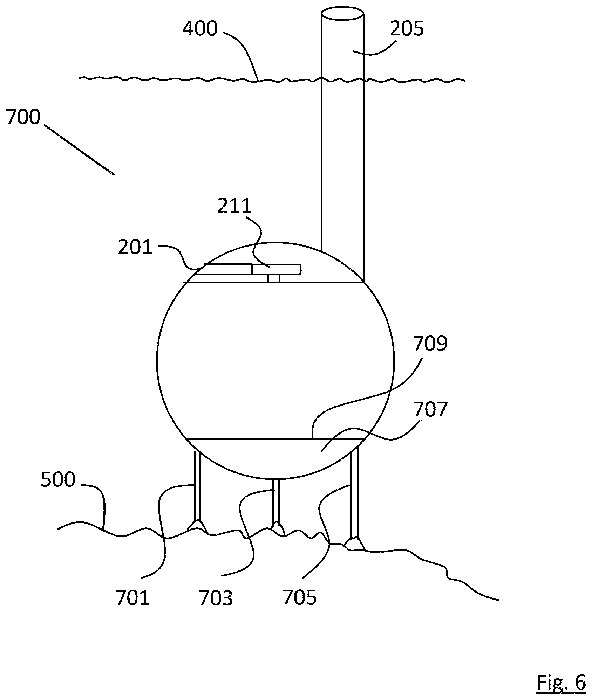

Referring to Figure 6, there is shown a diagrammatic representation of another still embodiment of submersible reservoir for use in the system according to the invention, indicated generally by the reference numeral 700, where like parts have been given the same reference numerals as before. The submersible reservoir 700 comprises a substantially spherically shaped body having a water charging inlet 201, a reservoir chamber 207, a turbine 211, and an upright service shaft 205. The generator, battery pack, floating platform and other components have been removed for clarity. The submersible reservoir comprises a plurality of adjustable legs 701, 703, 705 for supporting the submersible reservoir on the seabed 500. The submersible reservoir 700 differs in that it has an internal ballast chamber 707 at the base of the reservoir chamber 207. The internal ballast chamber comprises a section partially filled with aggregate, pebbles, concrete or metal that may then be further filled with water to achieve the desired amount of buoyancy of the submersible reservoir. A ballast level 709 is indicated on the reservoir chamber and when water is being evacuated from the chamber, the water is evacuated no lower than that level to ensure that the submersible reservoir stays in position on the seabed 500.

Throughout the specification, the cabling to the electricity grid has been omitted however it would be understood that this would be provided (or indeed cabling to a site requiring electricity other than the national electricity grid could be provided). In addition, the apparatus for the conversion of the electricity generated into a form suitable for transmission on the grid or for use in an end application could be done remotely if desired and the equipment to perform those tasks would be readily understood in the field. Further illustration is not required in the specification. The gas supply will preferably be air sourced from the atmosphere through the upright service shaft 205.

In this specification the term "comprise, comprises, comprised and comprising" and the terms "include, includes, included and including" are all deemed totally interchangeable and should be afforded the widest possible interpretation.

The invention is not solely limited to the embodiments hereinbefore described but may be varied in both construction and detail within the scope of the appended claims.

## Claims

1. A system (100) for the generation of hydroelectric power comprising:
a submersible reservoir (200, 700) having a releasably sealable water charging inlet (201), a water conduit (203) extending inwardly from the water charging inlet feeding a reservoir chamber (207), a turbine (211) in the water conduit, a generator (213) operatively connected to the turbine, a releasably sealable water discharge outlet, a gas compressor and a gas supply;
a floating platform (300) secured to the submersible reservoir, the floating platform having at least one stabilizer (301), and a wind turbine (303) mounted on the floating platform, **characterized in that** the submersible reservoir comprises an upright service shaft (205) for engagement of the floating platform (300), and in which the floating platform (300) is moveable upwards and downwards in a reciprocal fashion about the service shaft.

2. A system (100) for the generation of hydroelectric power as claimed in claim 1 in which the submersible reservoir (200, 700) comprises an adjustable ballast system for adjusting the ballast of the submersible reservoir.

3. A system (100) for the generation of hydroelectric power as claimed in claim 2 in which the adjustable ballast system comprises at least one ballast tank (209).

4. A system (100) for the generation of hydroelectric power as claimed in claim 2 or 3 in which the adjustable ballast system comprises a plurality of ballast tanks (209) spaced apart around the periphery of the reservoir chamber.

5. A system (100) as claimed in claim 2 in which the adjustable ballast system comprises a dedicated volume (707) of the reservoir chamber at the base of the submersible reservoir chamber.

6. A system (100) for the generation of hydroelectric power as claimed in any preceding claim in which the wind turbine (303) is operatively connected to the generator.

7. A system (100) for the generation of hydroelectric power as claimed in any preceding claim in which the floating platform (300) comprises a plurality of spaced apart platform stabilizers (301).

8. A system (100) for the generation of hydroelectric power as claimed in any preceding claim in which the floating platform (300) is provided with at least one anchor and tether connected to the anchor.

9. A system (100) for the generation of hydroelectric power as claimed in any preceding claim in which the submersible reservoir (200, 700) comprises means to detect the level of water in the reservoir chamber and releasably seal the water charging inlet (201) upon the water reaching a predetermined level in the reservoir chamber.

10. A system (100) for the generation of hydroelectric power as claimed in any preceding claim in which there is provided a battery storage unit for storage of electricity generated in the generator.

11. A system (100) for the generation of hydroelectric power as claimed in any preceding claim in which there is provided a wired connection to the electricity mains grid for distribution of the electricity generated in the generator.

12. A system (100) for the generation of hydroelectric power as claimed in any preceding claim in which the floating platform (300) is releasably secured to the submersible reservoir.

13. A system (100) for the generation of hydroelectric power as claimed in any preceding claim in which there is provided at least one of: a propulsion system for moving the floating platform (300); and a propulsion system for moving the submersible reservoir (200).

14. A method of constructing a system (100) for the generation of hydroelectric power of the type as claimed in claim 4 comprising the steps of:
partially submerging the submersible reservoir (200);
manoeuvering the floating platform (300) and the submersible reservoir (200) relative to each other so that the floating platform (300) is substantially above the submersible reservoir (200);
connecting the floating platform to the upright service shaft (205) of the submersible reservoir; and
sinking the submersible reservoir by actuating the adjustable ballast system by evacuating more air from the ballast tanks (209) and flooding the ballast tanks.

15. A method of constructing a system for the generation of hydroelectric power as claimed in claim 14 comprising the intermediate step of adjusting the length of stabilizer legs (701, 703, 705) of the submersible reservoir prior to sinking the submersible reservoir to the sea bed (500).

## Patentansprüche

1. System (100) zur Erzeugung von hydroelektrischer Kraft, umfassend:
einen tauchbaren Speicherbehälter (200, 700) mit einem lösbar verschließbaren Wassereinfülleinlass (201), einer Wasserleitung (203), die sich von dem Wassereinfülleinlass nach innen erstreckt und eine Speicherbehälterkammer (207) speist, einer Turbine (211) in der Wasserleitung, einem Stromerzeuger (213), der wirksam mit der Turbine verbunden ist, einem lösbar verschließbaren Wasserablassauslass, einem Gasverdichter und einer Gasversorgung;
eine schwimmende Plattform (300), die an dem tauchbaren Speicherbehälter befestigt ist, wobei die schwimmende Plattform mindestens einen Stabilisator (301), und eine Windturbine (303), die auf der schwimmenden Plattform montiert ist, aufweist, **dadurch gekennzeichnet, dass** der tauchbare Speicherbehälter einen aufrechten Betriebsschacht (205) zum Ineingriffnehmen der schwimmenden Plattform (300) umfasst und wobei die schwimmende Plattform (300) auf hin- und hergehende Weise um den Betriebsschacht aufwärts und abwärts bewegbar ist.

2. System (100) zur Erzeugung von hydroelektrischer Kraft nach Anspruch 1, wobei der tauchbare Speicherbehälter (200, 700) ein anpassbares Ballastsystem zum Anpassen des Ballasts des tauchbaren Speicherbehälters umfasst.

3. System (100) zur Erzeugung von hydroelektrischer Kraft nach Anspruch 2, wobei das anpassbare Ballastsystem mindestens einen Ballasttank (209) umfasst.

4. System (100) zur Erzeugung von hydroelektrischer Kraft nach Anspruch 2 oder 3, wobei das anpassbare Ballastsystem eine Vielzahl von Ballasttanks (209) umfasst, die um den Umfang der Speicherbehälterkammer beabstandet sind.

5. System (100) nach Anspruch 2, wobei das anpassbare Ballastsystem einen fest zugeordneten Raum (707) der Speicherbehälterkammer am Boden der tauchbaren Speicherbehälterkammer umfasst.

6. System (100) zur Erzeugung von hydroelektrischer Kraft nach einem der vorangehenden Ansprüche, wobei die Windturbine (303) wirksam mit dem Stromerzeuger verbunden ist.

7. System (100) zur Erzeugung von hydroelektrischer Kraft nach einem der vorangehenden Ansprüche, wobei die schwimmende Plattform (300) eine Vielzahl von voneinander beabstandeten Plattformstabilisatoren (301) umfasst.

8. System (100) zur Erzeugung von hydroelektrischer Kraft nach einem der vorangehenden Ansprüche, wobei die schwimmende Plattform (300) mit mindestens einem Anker und einer mit dem Anker verbundenen Halteleine versehen ist.

9. System (100) zur Erzeugung von hydroelektrischer Kraft nach einem der vorangehenden Ansprüche, wobei der tauchbare Speicherbehälter (200, 700) Mittel zum Erfassen des Niveaus des Wassers in der Speicherbehälterkammer und lösbaren Verschließen des Wassereinfülleinlasses (201), wenn das Wasser ein vorhergegebenes Niveau in der Speicherbehälterkammer erreicht, umfasst.

10. System (100) zur Erzeugung von hydroelektrischer Kraft nach einem der vorangehenden Ansprüche, wobei eine Batteriespeichereinheit zum Speichern von in dem Stromerzeuger erzeugtem elektrischen Strom bereitgestellt ist.

11. System (100) zur Erzeugung von hydroelektrischer Kraft nach einem der vorangehenden Ansprüche, wobei eine verdrahtete Verbindung zum Stromversorgungnetz zur Verteilung des in dem Stromerzeuger erzeugten elektrischen Stroms bereitgestellt ist.

12. System (100) zur Erzeugung von hydroelektrischer Kraft nach einem der vorangehenden Ansprüche, wobei die schwimmende Plattform (300) lösbar an dem tauchbaren Speicherbehälter befestigt ist.

13. System (100) zur Erzeugung von hydroelektrischer Kraft nach einem der vorangehenden Ansprüche, wobei mindestens eines der Folgenden bereitgestellt ist: ein Antriebssystem zum Bewegen der schwimmenden Plattform (300); und ein Antriebssystem zum Bewegen des tauchbaren Speicherbehälters (200).

14. Verfahren zum Herstellen eines Systems (100) zur Erzeugung von hydroelektrischer Kraft der Art nach Anspruch 4, umfassend die folgenden Schritte:
teilweises Untertauchen des tauchbaren Speicherbehälters (200);
Manövrieren der schwimmenden Plattform (300) und des tauchbaren Speicherbehälters (200) relativ zueinander, sodass sich die schwimmende Plattform (300) im Wesentlichen über dem tauchbaren Speicherbehälter (200) befindet;
Verbinden der schwimmenden Plattform mit dem aufrechten Betriebsschacht (205) des tauchbaren Speicherbehälters; und
Absenken des tauchbaren Speicherbehälters durch Betätigen des anpassbaren Ballastsystems durch Ablassen von mehr Luft aus den Ballasttanks (209) und Fluten der Ballasttanks.

15. Verfahren zum Herstellen eines Systems zur Erzeugung von hydroelektrischer Kraft nach Anspruch 14, umfassend den Zwischenschritt des Anpassens der Länge von Stabilisatorbeinen (701, 703, 705) des tauchbaren Speicherbehälters vor dem Absenken des tauchbaren Speicherbehälters auf den Meeresboden (500).

## Revendications

1. Système (100) pour la production d'énergie hydroélectrique comportant :
un réservoir submersible (200, 700) ayant une entrée de chargement d'eau (201) en mesure d'être scellée de manière amovible, un conduit d'eau (203) s'étendant vers l'intérieur à partir de l'entrée de chargement d'eau alimentant une chambre de réservoir (207), une turbine (211) dans le conduit d'eau, un générateur (213) relié de manière fonctionnelle à la turbine, une sortie d'évacuation d'eau en mesure d'être scellée de manière amovible, un compresseur de gaz et une alimentation en gaz ;
une plate-forme flottante (300) assujettie au réservoir submersible, la plate-forme flottante ayant au moins un stabilisateur (301), et une éolienne (303) montée sur la plate-forme flottante, **caractérisé en ce que** le réservoir submersible comporte une gaine de service verticale (205) servant à des fins de mise en prise de la plate-forme flottante (300), et dans lequel la plate-forme flottante (300) est mobile vers le haut et vers le bas d'une manière réciproque autour de la gaine de service.

2. Système (100) pour la production d'énergie hydroélectrique selon la revendication 1, dans lequel le réservoir submersible (200, 700) comporte un système de ballast ajustable servant à ajuster le ballast du réservoir submersible.

3. Système (100) pour la production d'énergie hydroélectrique selon la revendication 2, dans lequel le système de ballast ajustable comporte au moins un réservoir de ballast (209).

4. Système (100) pour la production d'énergie hydroélectrique selon la revendication 2 ou la revendication 3, dans lequel le système de ballast ajustable comporte une pluralité de réservoirs de ballast (209) espacés les uns des autres autour de la périphérie de la chambre de réservoir.

5. Système (100) selon la revendication 2, dans lequel le système de ballast ajustable comporte un volume dédié (707) de la chambre de réservoir à la base de la chambre de réservoir submersible.

6. Système (100) pour la production d'énergie hydroélectrique selon l'une quelconque des revendications précédentes, dans lequel l'éolienne (303) est reliée de manière fonctionnelle au générateur.

7. Système (100) pour la production d'énergie hydroélectrique selon l'une quelconque des revendications précédentes, dans lequel la plate-forme flottante (300) comporte une pluralité de stabilisateurs de plate-forme (301) espacés les uns des autres.

8. Système (100) pour la production d'énergie hydroélectrique selon l'une quelconque des revendications précédentes, dans lequel la plate-forme flottante (300) est dotée d'au moins une ancre et une attache reliée à l'ancre.

9. Système (100) pour la production d'énergie hydroélectrique selon l'une quelconque des revendications précédentes, dans lequel le réservoir submersible (200, 700) comporte des moyens servant à détecter le niveau d'eau dans la chambre de réservoir et à sceller de manière amovible l'entrée de chargement d'eau (201) lorsque l'eau atteint un niveau prédéterminé dans la chambre de réservoir.

10. Système (100) pour la production d'énergie hydroélectrique selon l'une quelconque des revendications précédentes, dans lequel une unité de stockage par batterie est mise en œuvre pour stocker l'électricité produite dans le générateur.

11. Système (100) pour la production d'énergie hydroélectrique selon l'une quelconque des revendications précédentes, dans lequel une connexion câblée au réseau électrique est mise en œuvre à des fins de distribution de l'électricité produite dans le générateur.

12. Système (100) pour la production d'énergie hydroélectrique selon l'une quelconque des revendications précédentes, dans lequel la plate-forme flottante (300) est assujettie de manière amovible au réservoir submersible.

13. Système (100) pour la production d'énergie hydroélectrique selon l'une quelconque des revendications précédentes, dans lequel il y a au moins un élément parmi : un système de propulsion servant à déplacer la plate-forme flottante (300) ; et un système de propulsion servant à déplacer le réservoir submersible (200).

14. Procédé de construction d'un système (100) pour la production d'énergie hydroélectrique du type selon la revendication 4, comportant les étapes consistant à :
immerger partiellement le réservoir submersible (200) ;
manœuvrer la plate-forme flottante (300) et le réservoir submersible (200) l'un par rapport à l'autre de telle sorte que la plate-forme flottante (300) se trouve sensiblement au-dessus du réservoir submersible (200) ;
relier la plate-forme flottante à la gaine de service verticale (205) du réservoir submersible ; et
faire couler le réservoir submersible en actionnant le système de ballast ajustable en évacuant davantage d'air en provenance des réservoirs de ballast (209) et en inondant les réservoirs de ballast.

15. Procédé de construction d'un système pour la production d'énergie hydroélectrique selon la revendication 14, comportant l'étape intermédiaire consistant à ajuster la longueur des pieds stabilisateurs (701, 703, 705) du réservoir submersible avant de faire couler le réservoir submersible dans le fond marin (500).
